# EUROPEAN PATENT APPLICATION

(11) **EP 2 944 371 A1**
(43) Date of publication of application: **18.11.2015**
(21) Application number: 14167913.4
(22) Date of filing: 12.05.2014
(51) Int. Cl.: B01F 5/00, B01F 5/04, F23L 7/00, F23R 3/14, F23R 3/28

(54) **Multi-fluid mixer and method for mixing a plurality of fluids**

(71) Applicant: Siemens Aktiengesellschaft, 80333 München (DE)
(72) Inventor: Janczewski, Jacek, 60376 Norrköping (SE)

(57) **Abstract**

The invention relates to a multi-fluid mixer (28) for mixing a plurality of fluids comprising a housing (68), a first fluid inlet (32) for introducing a first fluid (74) into the housing (68) and a second fluid inlet (34) for introducing a second fluid (76) into the housing (68).

A uniform mixture of the fluids (74, 76) can be achieved cost-effectively in that a swirling device (78) for swirling both fluids (74, 76) is arranged in the housing (68).

## Description

The invention relates to a multi-fluid mixer for mixing a plurality of fluids comprising a housing, a first fluid inlet for introducing a first fluid into the housing and a second fluid inlet for introducing a second fluid into the housing. Furthermore, the invention relates to method for mixing a plurality of fluids in a multi-fluid mixer, wherein a first fluid and a second fluid are introduced into the multi-fluid mixer.

In many technical fields, such as in chemical industry, pharmaceutical industry or power generation, a plurality of fluids needs to be mixed together for generating a fluid mixture. A mixing degree or uniformity, respectively, of such a fluid mixture affects a quality and/or an efficiency of subsequent processes in which the fluid mixture is employed. Typically, the quality and/or the efficiency of such processes can be increased with increasing uniformity. In combustion processes, for instance, a higher uniformity of a fluid mixture provided as a working medium for oxidizing a fuel results in more stable and more efficient combustion. So, fluid mixtures with a uniformity as high as possible are desired.

Mixing devices which allow for generating fluid mixtures with high uniformity usually employ a mixing vessel and an agitator arranged therein. The fluids to be mixed are introduced in such a mixing vessel, circulated by means of such an agitator and, thus, mixed together. However, mixing devices with agitators are relatively complex in production, prone to failure, maintenance-intensive and, thus, expensive.

One objective of the invention is to provide a multi-fluid mixer for mixing a plurality of fluids by which a uniform mixture of the fluids can be achieved cost-effectively.

This objective is accomplished by means of a multi-fluid mixer of the type mentioned in the introduction, wherein, according to the invention, a swirling device for swirling both fluids is arranged in the housing.

The invention is based on the finding that by jointly swirling two or more fluids a fluid mixture can be generated which exhibits a uniformity comparable to a uniformity achievable by mixing these fluids with an agitator.

The swirling device can be considered as a flow conditioning element, more particularly as a static flow conditioning element. Swirling a fluid, or a plurality of fluids, can be understood as generating a flow with a helical flow pattern from the fluid, or from the fluids respectively.

The multi-fluid mixer can be realized practically maintenance-free and practically without vulnerability to failure since it does not need movable components. In contrast to the aforementioned mixing devices, which can be operated in batch operation only, the multi-fluid mixer is prepared for continuous operation as the fluids to be mixed can run through the multi-fluid mixer continuously while being mixed therein. To sum up, the multi-fluid mixer can be realized cost-effectively while allowing for generating a uniform fluid mixture.

Although the swirling device is provided for mixing fluids, the multi-fluid mixer may comprise further components for mixing, or further mixing, said fluids.

The first fluid inlet can be a component/part of the housing or, alternatively, can be a separate mixer component which is connected to the housing. The same can apply to the second fluid inlet. The phrase "connected to" can be considered as directly or indirectly connected to.

The two fluid inlets can exhibit an identical cross sectional area or can exhibit different cross sectional areas. Further, one or both of the two fluids can have a tubular shape.

For instance, the first fluid inlet can be provided for introducing carbon dioxide into the multi-fluid mixer. The second fluid inlet can be provided for introducing another fluid, such as oxygen, into the multi-fluid mixer.

Furthermore, the multi-fluid mixer may feature one or more further fluid inlets, i.e., the multi-fluid mixer can exhibit, in total, more than two fluid inlets. Thus, the multi-fluid mixer may be provided for mixing more than two fluids.

Expediently, the swirling device comprises a plurality of vanes. These vanes may effect a swirling of one or more fluids passing the vanes, e.g., of the first and the second fluid.

Preferably, the vanes are guide vanes, i.e., they are fixed in place. The vanes may be fixed to a hub, particularly a non-rotating hub. Moreover, the vanes may be arranged annularly.

It is preferred, if the swirling device is an axial-flow swirling device. An axial-flow swirling device can be perceived as a device for swirling a fluid without essentially changing a translational flow direction of a flow of said fluid.

In an advantageous embodiment, at least one of the vanes comprises at least one orifice for introducing/injecting, the second fluid into the first fluid. In this way, the second fluid can be introduced/injected into the first fluid in the swirling device itself. Thus, a gravitational separation of both fluids, while they are flowing to the swirling device, can be avoided.

Preferentially, several of the vanes comprise at least one orifice for introducing/injecting the second fluid into the first fluid in each case. More preferentially, each of the vanes comprises at least one orifice for introducing/injectting the second fluid into the first fluid in each case. This allows for a spatially uniform introduction/injection of the second fluid into the first fluid.

Each of the vanes can comprise two plates, particularly two parallel plates. The plates may be produced by selective laser sintering or by selective laser melting. Further, the plates may be joined together, especially joined together sealingly, at their respective leading edge and/or rear edge.

At least one of the two plates can exhibit at least one orifice for introducing/injecting the second fluid into the first fluid. Preferably, each of the two plates exhibits at least one orifice for introducing/injecting the second fluid into the first fluid. The latter allows for introducing/injecting the second fluid into the first fluid along a first direction through at least one orifice of one of the two plates and also along a second direction through at least one further orifice of the other of the two plates. In particular, the first direction may be directed opposite to the second direction. Thus, a spatially more uniform introduction/injection of the second fluid into the first fluid can be achieved, as compared to an introduction/injection along only one direction.

The vanes can be twisted by an angle greater than 0° and less than 90° with respect to a direction of flow conductance of a flow conducting element arranged upstream, particularly immediately upstream, the swirling device. Preferentially, the angle is the same for all vanes. Said flow conducting element can be the first fluid inlet or an internal conduit of the multi-fluid mixer, for instance.

Furthermore, the housing may comprise a cylindrical section which exhibits a cylinder axis. This section can be the only section of the housing or one of a plurality of sections of the housing. Advantageously, the second fluid inlet is arranged tangentially, or basically tangentially, at the cylindrical section. Further it is advantageous, if the second fluid inlet is arranged perpendicularly, or basically perpendicularly, to the cylinder axis. In this way, a rotational flow can be achieved in the housing, especially in the cylindrical section of the housing.

Expediently, the multi-fluid mixer comprises a fluid outlet, particularly a tubular fluid outlet, for discharging a fluid or a fluid mixture from the housing. The fluid outlet can be a component/part of the housing or, alternatively, can be a separate mixer component which is connected to the housing. It is preferred, if the fluid outlet is arranged coaxially to the first fluid inlet and/or the swirling device. Thus, frictional losses caused by deflections of a fluid flow can be reduced/avoided. The first fluid inlet and/or the swirling device, in turn, may be arranged coaxially to the cylindrical section of the housing.

In an advantageous embodiment, a first flow conditioner is arranged in the housing, particularly in the cylindrical section of the housing. The first flow conditioner can be provided for conducting the second fluid to the swirling device in a predefined manner.

An internal space of the housing, particularly an internal space of the cylindrical section of the housing, may be divided into a first plenum and a second plenum by the first flow conditioner. The first and/or the second plenum can exhibit an annular shape. Further on, both plenums can be arranged coaxially to one another. Also, the first plenum may be surrounded by the second plenum. Then again, the swirling device may be surrounded by the second plenum.

It is preferred, if the first flow conditioner exhibits a cylindrical shape. Additionally, the first flow conditioner may be arranged coaxially to the cylindrical section of the housing. Further, it is preferred, if the first flow conditioner comprises a plurality of orifices, particularly equally spaced orifices, for radially introducing the second fluid from the first plenum into the second plenum.

In this context, radially can refer to the cylindrical shape of the flow conditioner. More particularly, radially can be considered as perpendicular to a cylindrical surface of the flow conditioner.

Preferentially, each of the vanes comprises a cavity, particularly a cavity located between the plates of the respective vane. It is advantageous, if the cavities are connected to the second plenum through a slot in each case. By this means, the second fluid can enter into the vanes.

Furthermore, the multi-fluid mixer can comprise a mixing chamber arranged downstream the swirling device. The mixing chamber may be provided for conducting a mixture of the first and the second fluid to the fluid outlet.

Advantageously, the multi-fluid mixer comprises a second flow conditioner for generating fluid jets. The second flow conditioner may be arranged downstream the swirling device, particularly in a flow conducting element of the multi-fluid mixer, such as the fluid outlet. With the aid of the second flow conditioner, an additional mixing of the fluid mixture generated by the swirling device can be achieved and, thus, uniformity of the fluid mixture can be increased.

Expediently, the second flow conditioner exhibits a plurality of orifices. Also, it is expedient, if the second flow conditioner exhibits a sectional shape of a body of rotation, particularly a sectional shape of a cone, a hemisphere or a spheroid. This allows for generating fluid jets which are inclined with respect to a center line of the second flow conditioner. In this way, it can be achieved, that the fluid jets collide with one another. In this context, a sectional shape of a body can be understood as a shape of at least a section of the body.

Preferably, a cross sectional area of the second flow conditioner increases in direction of flow conductance of the flow conducting element in which the second flow conditioner may be arranged.

The above-described multi-fluid mixer can be an element of a combustion system. The combustion system may, among other things, comprise a gas turbine and/or a furnace. Expediently, the combustion system comprises a combustion chamber.

Further, it is expedient, if the combustion system features a burner. The burner may be arranged in/at the combustion chamber. Also, the burner, or more precisely an inlet of the burner, can be connected to a fluid outlet of the multi-fluid mixer, particularly the aforementioned fluid outlet. Thereby, the burner may be supplied with a uniform fluid mixture generated in the multi-fluid mixer.

Moreover, the combustion system may comprise an exhaust gas feedback. The exhaust gas feedback may feature at least one line for feeding back an exhaust gas which is generated in a combustion to the multi-fluid mixer. Said exhaust gas may contain, among others, carbon dioxide. Preferentially, the exhaust gas feedback, more particularly a line of the exhaust gas feedback, is connected to the first fluid inlet of the multi-fluid mixer.

Additionally, the exhaust gas feedback may comprise a post-treatment device for post-treating the exhaust gas, particularly for separating undesired combustion products from the exhaust gas, e.g., by means of condensation. Water vapor, among others, may be such an undesired combustion product. Furthermore, the combustion system may comprise an oxygen supply. The oxygen supply may feature an oxygen storage in which pure oxygen is stored. In this context, pure oxygen can be regarded as a gas/gas mixture with an oxygen percentage of at least 90%. Preferentially, the oxygen supply is connected to the second fluid inlet of the multi-fluid mixer. More particularly, the oxygen storage may be connected to the second fluid inlet of the multi-fluid mixer via an oxygen feed line of the oxygen supply.

The multi-fluid mixer may be employed for generating a fluid mixture as a working medium for the burner of the combustion system, especially from the oxygen and the exhaust gas.

The previously described multi-fluid mixer can also be an element of a mixer system comprising at least two such multi-fluid mixers. Preferentially, a fluid outlet of a first of the multi-fluid mixers is connected to a fluid inlet of a second of the multi-fluid mixers, particularly by means of a connection line. In this manner, more than two fluids can be mixed together. For instance, the first multi-fluid mixer can be used to mix the first and the second fluid to generate a first fluid mixture. The first fluid mixture may be conducted further to an inlet of the second multi-fluid mixer. A third fluid may be introduced into the second multi-fluid mixer. The second multi-fluid mixer can be used to mix the third fluid with the first fluid mixture to generate a second fluid mixture comprising the three fluids.

Another objective of the invention is to provide a method for mixing a plurality of fluids in a multi-fluid mixer by which a uniform mixture of the fluids can be achieved cost-effectively.

This objective is accomplished by means of a method of the type mentioned in the introduction, wherein, according to the invention, both fluids are swirled by means of a swirling device, thus, generating a fluid mixture.

On the one hand, the multi-fluid mixer used in the method can be the above-described multi-fluid mixer. On the other hand, the method may be used for operating the above-described multi-fluid mixer.

Moreover, the swirling device, by means of which both fluids are swirled, can be the aforementioned swirling device of the above-described multi-fluid mixer.

The fluid mixture can be understood as a mixture of the first and the second fluid. However, this does not exclude that the fluid mixture may comprise another fluid.

The swirling may effect a helical flow of the fluid mixture, and, thus, may extend a flow path of the fluid mixture, as compared to a straight flow path. By this means, a mixing duration can be increased, allowing for a more uniform mixture.

In a preferred embodiment, the second fluid is introduced/injected into the first fluid through at least one orifice of a vane of the swirling device.

Preferably, the second fluid is introduced into a cavity of the vane. In particular, the second fluid may be introduced into the cavity through a slot. Afterwards, the second fluid can be injected from the cavity into a vane interspace through the orifice of the vane.

The term "vane interspace" may refer to a space between the vane and another vane of the swirling device, wherein both vanes may be arranged next to each other. Expediently, the vane interspace is flowed through by the first fluid.

Advantageously, a rotational flow is generated from the second fluid. In particular, the rotational flow can be generated in a cylindrical housing section of the multi-fluid mixer. By generating the rotational flow, the second fluid can be distributed evenly in the cylindrical housing section. The rotational flow may include a spiral/helical flow.

Furthermore, the rotational flow may flow in parts around a flow conditioner. Also, the rotational flow may flow in parts towards the flow conditioner. For instance, said flow conditioner can be the aforementioned first flow conditioner of the above-described multi-fluid mixer.

Also, it is advantageous, if the second fluid is conducted radially from the flow conditioner towards the swirling device, particularly through a plurality of orifices in the flow conditioner.

In a preferred embodiment, a plurality of fluid jets is generated from the fluid mixture. Expediently, the fluid jets are arranged/oriented such that they collide with one another. Thus, a turbulent flow of the fluid mixture can be generated. Said turbulent flow can cause further mixing of the fluid mixture.

The generation of the fluid jets can be realized by means of a further flow conditioner. For instance, the further flow conditioner can be the aforementioned second flow conditioner of the above-described multi-fluid mixer. The arrangement/orientation of the fluid jets may be predefined by shape, size, location and/or orientation of the further flow conditioner.

The above-described method can be employed in operation of a combustion system, wherein a first fluid and a second fluid are mixed together according the above-described method.

The combustion system which is operated can be the aforementioned combustion system.

In operation of the combustion system, an exhaust gas generated in a combustion can be conducted to the multi-fluid mixer, particularly by means of an exhaust gas feedback. The exhaust gas may contain carbon dioxide. Further on, the exhaust gas may be introduced into the multi-fluid mixer, preferentially as the first fluid.

Moreover, oxygen can be introduced into the multi-fluid mixer, preferentially as the second fluid. The oxygen may be supplied from an oxygen supply.

The exhaust gas and the oxygen can be mixed together in the multi-fluid mixer. In doing so, an oxidizing working medium can be generated. The exhaust gas may be used to control a combustion temperature by adjusting a percentage of the exhaust gas in the working medium.

The working medium can be conducted from the multi-fluid mixer to a burner. Further on, the working medium may be introduced into the burner.

In addition, a fuel can be introduced into the burner. The fuel may be supplied from a fuel supply.

Preferably, the working medium and the fuel are mixed together in the burner. A combustion medium may be generated thereby. The combustion medium may be understood as a combustible mixture of the working medium and the fuel, i.e., a combustible mixture of the oxygen, the exhaust gas and the fuel.

Furthermore, the combustion medium can be combusted by means of the burner, preferably in a combustion chamber of the combustion system.

Even if terms are used in the singular or in a specific numeral form, the scope of the invention should not be restricted to the singular or the specific numeral form. Where applicable the indefinite article "a" can be regarded as "at least one".

The previously given description of advantageous embodiments of the invention contains numerous features which are partially combined with one another in the dependent claims. Expediently, these features can also be considered individually and be combined with one another into further suitable combinations. More particularly, these features can be combined with the multi-fluid mixer and the method according to the respective independent claim individually as well as in any suitable combination. Furthermore, features of the method, formulated as apparatus features, can be considered as features of the multi-fluid mixer and, accordingly, features of the multi-fluid mixer, formulated as process features, can be considered as features of the method.

The above-described characteristics, features and advantages of the invention and the manner in which they are achieved can be understood more clearly in connection with the following description of exemplary embodiments which will be explained with reference to the drawings. The exemplary embodiments are intended to illustrate the invention, but are not supposed to restrict the scope of the invention to combinations of features given therein, neither with regard to functional features. Furthermore, suitable features of each of the exemplary embodiments can also be explicitly considered in isolation, be removed from one of the exemplary embodiments, be introduced into another of the exemplary embodiments and/or be combined with any of the appended claims.

In the drawings display:
- FIG 1: a schematic overview of a combustion system comprising a pure oxygen supply, a fuel supply, an exhaust gas feedback, a generator, a multi-fluid mixer and a gas turbine with a burner;
- FIG 2: a perspective and sectional view of the multi-fluid mixer from FIG 1;
- FIG 3: another perspective and sectional view of the multi-fluid mixer from FIG 1;
- FIG 4: yet another perspective and sectional view of the multi-fluid mixer from FIG 1; and
- FIG 5: a schematic overview of a mixer system comprising three multi-fluid mixers.

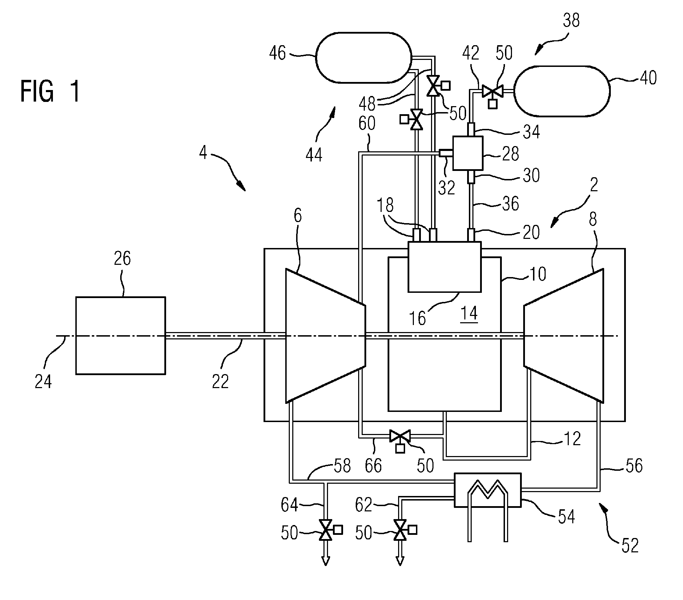

FIG 1 shows a schematic overview of a combustion system 2. The combustion system 2 comprises a gas turbine 4 which exhibits a compressor 6, an expander 8 and a combustion chamber 10 arranged in between, wherein the combustion chamber 10 is connected to the expander 8 via a first transport line 12.

The combustion chamber 10 encloses a combustion volume 14. Further, a burner 16 is fixed to the combustion chamber 10. Said burner 16 exhibits two fuel inlets 18 as well as a working medium inlet 20.

Further on, the gas turbine 4 comprises a turbine shaft 22 which is rotatable about a rotational axis 24 and which extends longitudinally through the gas turbine 4. The turbine shaft 22 drivingly connects the expander 8 to the compressor section 6 as well as to a generator 26 for power generation.

The combustion system 2 also comprises a multi-fluid mixer 28 with a fluid outlet 30, a first fluid inlet 32 and a second fluid inlet 34. The fluid outlet 30 of the multi-fluid mixer 28 is connected to the working medium inlet 20 of the burner 16 via a working medium feed line 36.

Moreover, the combustion system 2 comprises a pure oxygen supply 38 with a pure oxygen storage 40. Said pure oxygen storage 40 is embodied as a gas tank in which pure oxygen is stored, the oxygen being used as a constituent of an oxidizing working medium. Also, the pure oxygen supply 38 comprises an oxygen feed line 42 from the pure oxygen storage 40 to the second fluid inlet 34 of the multi-fluid mixer 28.

Additionally, the combustion system 2 comprises a fuel supply 44 with a fuel storage 46. The fuel storage 40 is embodied as a gas tank in which a fuel, in the present example methane, is stored. The fuel supply 44 further comprises two fuel feed lines 48 which are connected to the fuel storage 46 and to different fuel inlets 18 of the burner 16 in each case.

The oxygen feed line 42 and the two fuel feed lines 48 are equipped with a valve 50 in each case. These vales 50 are provided for controlling a flow rate of an oxygen flow and a fuel flow in the respective line.

Furthermore, the combustion system 2 comprises an exhaust gas feedback 52 for feeding back a portion of an exhaust gas, in the present example carbon dioxide and water vapor, to the compressor 6, the exhaust gas being generated in combustion of the fuel with the pure oxygen from the afore-mentioned working medium.

The exhaust gas feedback 52 comprises a post-treatment device 54 for separating a portion of undesired combustion products, such as water vapor, from the exhaust gas. Also, the exhaust gas feedback 52 exhibits a discharge line 56 for discharging a portion of the exhaust gas from the combustion chamber 14 through the expander 8. In addition, the exhaust gas feedback 52 comprises a second transport line 58. The post-treatment device 54 is connected to the expander 8 via the discharge line 56. Further, the post-treatment device 54 is connected to the compressor 6 via the second transport line 58.

Moreover, the exhaust gas feedback 52 comprises an exhaust gas feed line 60 which is connected to the compressor 6 as well as to the first fluid inlet 32 of the multi-fluid mixer 28. By this means, the exhaust gas compressed in the compressor 6 can be conducted from the compressor 6 into the first fluid inlet 32 of the multi-fluid mixer 28.

The exhaust gas feedback 52 also comprises a first bleed line 62 and a second bleed line 64 both of which are equipped with a valve 50. The first bleed line 62 is connected to the post-treatment device 54, while the second bleed line 64 is connected to the second transport line 58.

The compressor 6, more precisely an outlet of the compressor 6, is connected to the expander 8, more precisely to an inlet of the expander 8, by means of a bypass line 66 which is equipped with a valve 50. This valve 50 is provided for controlling a flow rate of the exhaust gas bypassing the burner 16 or the combustion chamber 10, respectively. The bypass line 66 is connected to the compressor 6 as well as to the first transport line 12.

In operation of the gas turbine 4, the exhaust gas generated during combustion is discharged from the expander 8 through the discharge line 56, is post-treated by means of the post-treatment device 54 and is fed into the compressor 6 through the second transport line 58. The exhaust gas is compressed in the compressor 6 and is conveyed to the multi-fluid mixer 28 through the exhaust gas feed line 60.

The pure oxygen from the pure oxygen storage 40 is conducted to the multi-fluid mixer 28 through the oxygen feed line 42. The pure oxygen and the compressed exhaust gas are intermixed in the multi-fluid mixer 28, thus, forming the working medium which is discharged from the multi-fluid mixer 28 and conveyed to the burner 16 via the working medium feed line 36.

The fuel supplied from the fuel supply 44 is introduced into the burner 16 through one or both of the two fuel inlets 18. Further, the fuel and the working medium are mixed together in the burner 16, thus, generating a combustion medium.

The combustion medium is introduced into the combustion volume 14 and, by means of the burner 16, is combusted therein, wherein the exhaust gas is produced. The exhaust gas is channeled via the first transport line 12 to the expander 8. The exhaust gas enters the expander 8, thus, driving the expander 8 which, in turn, rotates the turbine shaft 22.

In order to maintain combustion temperature and flame stability, a portion of the exhaust gas compressed in the compressor 6 is conducted from the compressor 6 to the expander 8 through the bypass line 66, thus, bypassing the burner 16. A flow of this exhaust gas portion passing through the bypass line 66 is controlled by means of the valve 50 arranged in the bypass line 66, which simultaneously controls a portion of the exhaust gas compressed in the compressor 6 entering the burner 16. Alternatively or additionally, the flow of the exhaust gas portion passing through the bypass line 56 could be controlled by means of a fixed orifice in the bypass line 56.

A portion of the combustion medium leaving the expander 8 through the discharge line 56 and further being conducted in the second transport line 58 is bled off from the second transport line 58 by means of the second bleed line 64.

A portion of the water vapor contained in the exhaust gas from the expander 8 is condensed in the post-treatment device 54 and is bled off through the first bleed line 62.

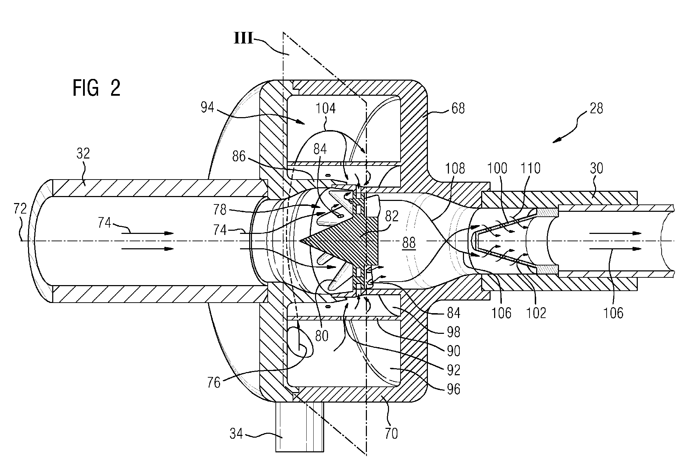

FIG 2 shows the multi-fluid mixer 28 from FIG 1 in a sectional and perspective view.

The multi-fluid mixer 28 comprises a housing 68 which exhibits a cylindrical section 70 with a cylinder axis 72. The aforementioned first fluid inlet 32, second fluid inlet 34 and fluid outlet 30 of the multi-fluid mixer 28 are also depicted in FIG 2.

The first fluid inlet 32 exhibits a tubular shape and is connected to the cylindrical section 70 of the housing 68. The same applies to the second fluid inlet 34. Further, the first fluid inlet 32 is arranged coaxially to the cylindrical section 70 of the housing 68, whereas the second fluid inlet 34 is arranged tangentially at the cylindrical section 70 and also perpendicularly to the cylinder axis 72.

The first fluid inlet 32 is provided for introducing a first fluid 74 into the multi-fluid mixer 28, while the second fluid inlet 34 is provided for introducing a second fluid 76 into the multi-fluid mixer 28. In the present example, the first fluid 74 is the exhaust gas supplied to the multi-fluid mixer 28 from the exhaust gas feedback 52, and the second fluid 76 is the pure oxygen supplied to the multi-fluid mixer 28 from the pure oxygen supply 38.

Moreover, the first fluid inlet 32 exhibits a larger cross sectional area than the second fluid inlet 34 to account for the fact that a higher flow rate is scheduled for the first fluid 74 than for the second fluid 76.

Further, the multi-fluid mixer 28 features a swirling device 78 which is arranged in the cylindrical section 70 of the housing 68, particularly coaxially to the cylindrical section 70, and comprises a plurality of vanes 80. The swirling device 78 is designed as an axial-flow swirling device.

Said vanes 80 are designed as guide vanes. In particular, the vanes 80 are fixed to a conical, non-rotating hub 82 of the multi-fluid mixer 28 in an annular arrangement.

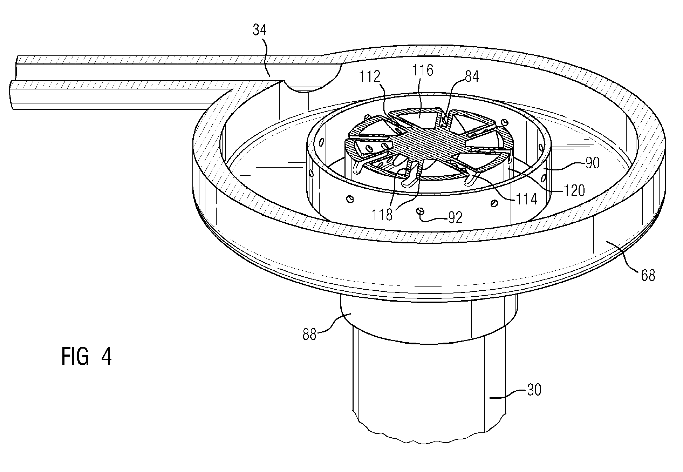

Each of the vanes 80 comprises two parallel plates which are joined together sealingly at their respective leading edge and rear edge. Furthermore, each of the vanes 80 comprises a cavity located between the plates of the respective vane 80 (cf. FIG 4).

One of the two plates exhibits one orifice 84 for injecting the second fluid 76 into the first fluid 74 along a first direction, and the other of the two plates exhibits two orifices 84 for injecting the second fluid 76 into the first fluid 74 along a second direction directed opposite to the first direction.

The vanes 80 are twisted by an angle greater than 0° and less than 90° with respect to a direction of flow conductance of an internal conduit 86 arranged immediately upstream the swirling device 78, wherein the direction of flow conductance of the internal conduit 86 runs along the cylinder axis 72.

Furthermore, the multi-fluid mixer 28 comprises a basically cylindrical mixing chamber 88 which is a part of the housing 68 and is arranged downstream the swirling device 78 plus coaxially to the swirling device 78.

The fluid outlet 30 has a tubular shape and is connected to the mixing chamber 88 such that the fluid outlet 30 is arranged coaxially to the first fluid inlet 32 and the swirling device 78.

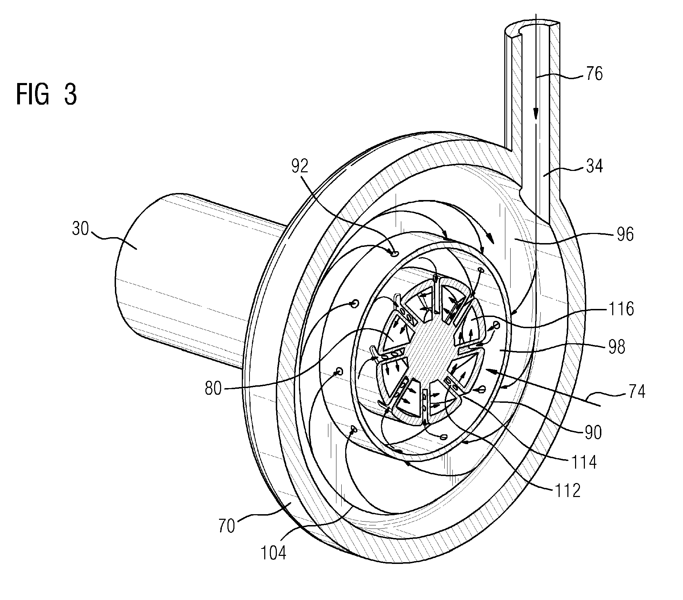

Further on, a first flow conditioner 90 with a cylindrical shape is arranged in the cylindrical section 70 of the housing 68, particularly coaxially to the cylindrical section 70. The first flow conditioner 90 comprises a plurality of equally spaced orifices 92 (cf. also FIG 3 and FIG 4).

An internal space 94 of the cylindrical section 70 is divided into a first annular plenum 96 and a second annular plenum 98 by the first flow conditioner 90. The first plenum 96 and the second plenum 98 are arranged coaxially to one another. Also, the first plenum 96 is surrounded by the second plenum 98. Then again, the swirling device 78 is surrounded by the second plenum 98.

In addition, the multi-fluid mixer 28 comprises a second flow conditioner 100 with a plurality of orifices 102. The second flow conditioner 100 is arranged downstream the swirling device 78 in the fluid outlet 30 and exhibits a shape of a truncated cone. Further, the second flow conditioner 100 is oriented such that its cross sectional area increases in direction of flow conductance of the fluid outlet 30, wherein the direction of flow conductance of the fluid outlet 30 runs along the cylinder axis 72.

In operation of the multi-fluid mixer 28, the first fluid 74, i.e., a portion of the exhaust gas generated in the combustion and conducted to the multi-fluid mixer 28 by means of the exhaust gas feedback 52, is introduced into the multi-fluid mixer 28 via the first fluid inlet 32. Also, the second fluid 76, i.e., the pure oxygen from the pure oxygen supply 38, is introduced into the multi-fluid mixer 28 via the second fluid inlet 34.

The first fluid 74 is conducted from the first fluid inlet 32 to the swirling device 78 through the internal conduit 86.

The second fluid 76, entering the first plenum 96 trough the second fluid inlet 34, is set into a rotational flow 104 due to the tangential arrangement of the second fluid inlet 34 at the cylindrical section 70 of the housing 68 and due to the shape of the cylindrical section 70 by itself. Thus, the second fluid 76 is distributed evenly in the first plenum 96.

Said rotational flow 104 of the second fluid 76 flows in parts around the first flow conditioner 90 and in parts towards the first flow conditioner 90 (cf. also FIG 3).

The second fluid 76, entering the second plenum 98 through the orifices 92 in the first flow conditioner 90, is conducted radially, i.e., perpendicularly to a surface of the first flow conditioner 90, towards the swirling device 78. Further, the second fluid 76 is introduced into the aforementioned cavities of the vanes 80.

The first flow conditioner 90 contributes to a uniform distribution of the second fluid 76 entering the cavities in the vanes 80 due to a pressure drop of the second fluid 76 across the first flow conditioner 90.

Through the orifices 84 of the vanes 80, the second fluid 76 is injected into the first fluid 74 which enters the swirling device 78. The first fluid 74 and the second fluid 76 are swirled by means of the swirling device 78, thus, generating a homogeneous fluid mixture 106 from both fluids.

The swirling effects a helical flow 108 of the fluid mixture 106 in the mixing chamber 88. Thus, a flow path of the fluid mixture 106 is extended, as compared to a straight flow path, and, consequently, mixing time is prolonged.

The fluid mixture 106 flows out of the mixing chamber 88 and enters the fluid outlet 30. In the fluid outlet 30, the fluid mixture 106 flows though the orifices 102 of the second flow conditioner 100. Thereby, a plurality of fluid jets 110 is generated from the fluid mixture 106, wherein the fluid jets 110 are arranged perpendicularly to a surface of the second flow conditioner 100 so that they collide with one another. Thus, a turbulent flow of the fluid mixture 106 is generated, and said turbulent flow causes further/final mixing of the fluid mixture 106.

Then, the fluid mixture 106 is conducted from the multi-fluid mixer 28 to the burner 16 and is introduced into the burner 16 as the oxidizing working medium (cf. also FIG 1).

Moreover, a cross-sectional plane III across the cylindrical section 70 of the housing 68 and also across the swirling device 78 is depicted in FIG 2.

FIG 3 shows the multi-fluid mixer 28 from FIG 1 in a sectional and perspective view, wherein the multi-fluid mixer 28 is cut across the cross-sectional plane III from FIG 2.

Among other things, FIG 3 illustrates how the second fluid 76 is distributed/conducted in the cylindrical section 70 of the housing 68 after entering the first plenum 96 through the second fluid inlet 34.

The second fluid 76 is set into a rotational flow 104 which flows in parts around the first flow conditioner 90 and in parts towards the first flow conditioner 90.

A portion of the second fluid 76 which has flowed towards the first flow conditioner 90 enters the second plenum 98 through the orifices 102 in the first flow conditioner 90. In the second plenum 98, said portion of the second fluid 76 is conducted radially towards the swirling device 78 and is introduced into the cavities 112 of the vanes 80 through slots 114 which connect the second plenum 98 with the cavities 112.

From the cavities 112, the second fluid 76 is injected into vane interspaces 116 through the orifices 84 of the vanes 80, said vane interspaces 116 being flowed through by the first fluid 74. Thus, the second fluid 76 is injected into first fluid 74.

FIG 4 shows the multi-fluid mixer 28 from FIG 1 in a sectional and perspective view, wherein the multi-fluid mixer 28 is cut across the cross-sectional plane III from FIG 2 and is shown in a different perspective than in FIG 3.

Among other things, FIG 4 illustrates the arrangement of the cavities 112. The cavities 112 of the vanes 80 are arranged between the two aforementioned plates 118 of the respective vane 80 in each case. Each of the cavities 112 is connected to the second plenum 98 through a slot 114 located at a circumferential surface 120 of the swirling device 78.

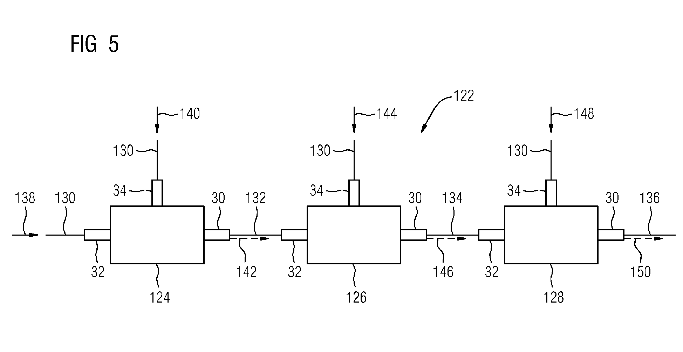

FIG 5 shows a schematic overview of a mixer system 122 comprising three multi-fluid mixers 124, 126, 128, wherein each of the three multi-fluid mixers 124, 126, 128 is designed like the multi-fluid mixer 28 depicted in FIG 2 to FIG 4 and described in connection with these figures.

Each of the three multi-fluid mixers 124, 126, 128 exhibits a fluid outlet 30, a first fluid inlet 32 and a second fluid inlet 34.

The respective second fluid inlet 34 of each of the multi-fluid mixers 124, 126, 128 is connected to a fluid feed line 130 and the first fluid inlet 32 of a first of the three multi-fluid mixers 124 is also connected to a fluid feed line 130.

Further on, the fluid outlet 30 of the first multi-fluid mixer 124 is connected to the first fluid inlet 32 of a second of the three multi-fluid mixers 126 by means of a first connection line 132. The fluid outlet 30 of the second multi-fluid mixer 126 is connected to the first fluid inlet 32 of a third of the three multi-fluid mixers 128 by means of a second connection line 134. Thus, the three multi-fluid mixers 124, 126, 128 are connected serially.

Moreover, the fluid outlet 30 of the third multi-fluid mixer 128 is connected to a fluid mixture line 136.

In operation of the mixer system 122, a first fluid 138 is introduced through the first fluid inlet 32 of the first multi-fluid mixer 124 and a second fluid 140 is introduced through the second fluid inlet 34 of the first multi-fluid mixer 124. Both fluids 138, 140 are mixed together in the first multi-fluid mixer 124 to generate a first fluid mixture 142.

The first fluid mixture 142 is discharged from the first multi-fluid mixer 124 through its fluid outlet 30, is conducted to the second multi-fluid mixer 126 by means of the first connection line 132 and is introduced into the second multi-fluid mixer 126 through the first fluid inlet 32 of the second multi-fluid mixer 126.

A third fluid 144 is introduced through the second fluid inlet 34 of the second multi-fluid mixer 126. Further on, the first fluid mixture 142 and the third fluid 144 are mixed together in the second multi-fluid mixer 126 generating a second fluid mixture 146.

The second fluid mixture 146 is discharged from the second multi-fluid mixer 126 through its fluid outlet 30, is conducted to the third multi-fluid mixer 128 by means of the second connection line 134 and is introduced into the third multi-fluid mixer 128 through the first fluid inlet 32 of the third multi-fluid mixer 128.

A fourth fluid 148 is introduced through the second fluid inlet 34 of the third multi-fluid mixer 128. The second fluid mixture 146 and the fourth fluid 148 are mixed together in the third multi-fluid mixer 128 generating a third fluid mixture 150.

Finally, the third fluid mixture 150 comprising all four fluids 138, 140, 144, 148 is discharged through the fluid outlet 30 of the third multi-fluid mixer 128.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and should not be construed as limiting the scope of the claims or disclosure, which are to be given the full breadth of the appended claims, and any equivalents thereof.

## Claims

1. Multi-fluid mixer (28) for mixing a plurality of fluids (74, 76) comprising a housing (68), a first fluid inlet (32) for introducing a first fluid (74) into the housing (68), a second fluid inlet (34) for introducing a second fluid (76) into the housing (68), and a swirling device (78) for swirling both fluids (74, 76) which is arranged in the housing (68) and comprises a plurality of vanes (80),
**characterized in that** at least one of the vanes (80) comprises at least one orifice (84) for introducing the second (76) fluid into the first fluid (74).

2. Multi-fluid mixer (28) according to claim 1,
**characterized in that** each of the vanes (80) comprises two plates (118), particularly two parallel plates (118), and each of the two plates (118) exhibits at least one orifice (84) for introducing the second fluid (76) into the first fluid (74) .

3. Multi-fluid mixer (28) according to claim 1 or 2,
**characterized in that** the housing (68) comprises a cylindrical section (70) which exhibits a cylinder axis (72), and the second fluid inlet (34) is arranged tangentially, or basically tangentially, at the cylindrical section (70) and also perpendicularly, or basically perpendicularly, to the cylinder axis (72).

4. Multi-fluid mixer (28) according to any of the preceding claims,
**characterized by** a fluid outlet (30) for discharging a fluid mixture (106) from the housing (68), wherein the fluid outlet (30) is arranged coaxially to the first fluid inlet (32) and the swirling device (78).

5. Multi-fluid mixer (28) according to any of the preceding claims,
**characterized in that** a first flow conditioner (90) is arranged in the housing (68), an internal space (94) of the housing (68) is divided into a first annular plenum (96) and a second annular plenum (98) by the first flow conditioner (90), wherein both plenums (96, 98) are arranged coaxially to one another and the first plenum (96) is surrounded by the second plenum (98).

6. Multi-fluid mixer (28) according to claim 5,
**characterized in that** the first flow conditioner (90) exhibits a cylindrical shape and also comprises a plurality of orifices (92), particularly equally spaced orifices (92), for radially introducing the second fluid (76) from the first plenum (96) into the second plenum (98).

7. Multi-fluid mixer (28) according to claim 5 or 6,
**characterized in that** each of the vanes (80) comprises a cavity (112) which is connected to the second plenum (98) through a slot (114).

8. Multi-fluid mixer (28) according to any of the preceding claims,
**characterized by** a second flow conditioner (100) for generating fluid jets (110), wherein the second flow conditioner (100) is arranged downstream the swirling device (78) and exhibits a plurality of orifices (102) and a sectional shape of a body of rotation, particularly a sectional shape of a cone, a hemisphere or a spheroid.

9. Combustion system (2) comprising a multi-fluid mixer (28) according to any of the preceding claims, an exhaust gas feedback (52) which is connected to the first fluid inlet (32) of the multi-fluid mixer (28), an oxygen supply (38) which is connected to the second fluid inlet (34) of the multi-fluid mixer (28), and a burner (16) which is connected to a fluid outlet (30) of the multi-fluid mixer (28).

10. Mixer system (122) comprising at least two multi-fluid mixers (124, 126, 128) according to any of the claims 1 to 8, wherein a fluid outlet (30) of a first of the multi-fluid mixers (124, 126, 128) is connected to a fluid inlet (32, 34) of a second of the multi-fluid mixers (124, 126, 128).

11. Method for mixing a plurality of fluids (74, 76) in a multi-fluid mixer (28), wherein a first fluid (74) and a second fluid (76) are introduced into the multi-fluid mixer (28) and both fluids (74, 76) are swirled by means of a swirling device (78), thus, generating a fluid mixture (106), **characterized in that** the second fluid (76) is introduced into the first fluid (74) through at least one orifice (84) of a vane (80) of the swirling device (78).

12. Method according to claim 11,
**characterized in that** the second fluid (76) is introduced into a cavity (112) of the vane (80) through a slot (114) and is afterwards injected from the cavity (112) into a vane interspace (116) through the orifice (84) of the vane (80), wherein the vane interspace (116) is flowed through by the first fluid (74).

13. Method according to claim 11 or 12,
**characterized in that** a rotational flow (104) is generated from the second fluid (76), wherein the rotational flow (104) flows in parts around a flow conditioner (90) and in parts towards the flow conditioner (90).

14. Method according to any of the claims 11 to 13,
**characterized in that** a plurality of fluid jets (110) is generated from the fluid mixture (106), wherein the fluid jets (110) are arranged/oriented such that they collide with one another and, thus, a turbulent flow of the fluid mixture (106) is generated, causing further mixing of the fluid mixture (106) .

15. Method for operating a combustion system (2), wherein a first fluid (74) and a second fluid (76) are mixed together according to any of the claims 10 to 14,
**characterized in that**
- an exhaust gas generated in a combustion and containing carbon dioxide is conducted to the multi-fluid mixer (28) by means of an exhaust gas feedback (52) and is introduced into the multi-fluid mixer (28) as the first fluid (74),
- oxygen from an oxygen supply (38) is introduced into the multi-fluid mixer (28) as the second fluid (76),
- the exhaust gas and the oxygen are mixed together in the multi-fluid mixer (28), generating an oxidizing working medium,
- the working medium is conducted from the multi-fluid mixer (28) to a burner (16) and is introduced into the burner (16) ,
- a fuel from a fuel supply (44) is introduced into the burner (16),
- the working medium and the fuel are mixed together in the burner (16), generating a combustion medium, and
- the combustion medium is combusted by means of the burner (16) .
